# EUROPEAN PATENT APPLICATION

(11) **EP 1 195 087 A2**
(43) Date of publication of application: **10.04.2002**
(21) Application number: 01500241.3
(22) Date of filing: 02.10.2001
(51) Int. Cl.: A01K 39/012

(54) **Poultry trough**

(30) Priority: 03.10.2000 ES 200002378
(71) Applicant: Romeu Guardia, Gener, 25310 Agramunt (ES)
(72) Inventor: Saura Borja, Octavio, 25310 Agramunt (ES)
(74) Representative: SUGRANES - VERDONCES - FERREGÜELA

(57) **Abstract**

It is of the kind which can be connected to a horizontal tubular conduit(4) for the transport of feed, and it comprises a main vertical tubular body (1), an integral feed collar (6), an outer cone (11), an inner cone (14), a vertical distributing tubular body (17) and a plate (20), integral and coaxial to each other and adapted in such a manner that the change of level of the horizontal tubular conduit (4) causing the sliding of the main vertical tubular body (1) in respect of the vertical distributing tubular body (17) causing the unloading of feed in the plate (20) through several lateral openings (5, 6, 18) disposed on the main vertical tubular body (1), the inner cone (14) and the vertical distributing tubular body (17) or, alternatively, through the lower openings of the distributor tubular vertical body (17).

## Description

### Technical Field of the Invention.-

The object of the invention is a poultry trough, which is for use in farms for breeding poultry intended for consumption.

### Background to the invention.-

A wide variety of embodiments of poultry feeding devices are known, of the type used on farms for the breeding of poultry intended for consumption, for example, chickens. Essentially, such feeding devices comprise a horizontal tubular conduit for the transport of feed and a plurality of troughs to said conduit, the amount of feed deposited in the troughs depending on the animal's stage of growth and is regulated by means of different procedures.

As an example of an embodiment of poultry trough, that described in Patent ES 2 078 203 should be pointed out, being composed of a grid, a vertical drop tube which can be connected to a horizontal tubular conduit for the transport of feed and a trough pan joined to the grid. The trough according to ES 2 078 203 presents the drawbacks which are related in detail below:
- The joining of the trough pan with the rest of the trough consists of a void movement, which can give rise to the feed pan tilting easily when it rests on the floor or an irregular surface, so the feed could tend to accumulate in one area of the feed pan and become irregularly distributed.
- As troughs are normally made of slightly flexible plastic material, when a heavy weight of feed accumulates in the feed pan or an animal stands on it, this can cause the plastic material which constitutes the feed pan to become warped, resulting in the latter detaching itself from the trough.
- The void movement connection, which comprises an upper and lower limit, means that when the feed pan is dismantled for a thorough cleaning of the trough, it is necessary to warp the plastic, due to its intrinsic flexibility, in order to overcome the opposition of the respective limits. The repeated warping of the plastic material can end up increasing the aforementioned problem of the detaching of the feed pan from its support.
- Finally, it should be highlighted that the adjustment of the height of the feed pan wall is for increasing or decreasing the height of the feeding circuit with respect to the floor. On the other hand, there is a contradiction in that in the lowered position of the feed pan wall (corresponding to when the animal is a chick) an abundant amount of feed is needed, whereas in the raised position of said wall the amount of feed has to be reduced to a minimum as a restriction of the amount of feed digested by the fully-grown animals is always necessary and because of all this it is necessary to carry out a manual adjustment of the feed outlet tube in order to control the amount of the same, which, due to the high number of troughs that are usually to be found in an animal breeding place, requires a great deal of labour, which makes the process much dearer.

### Explanation of the invention.-

The poultry trough object of the invention is of the kind which can be connected to a horizontal tubular conduit for the transport of feed and is essentially characterised by comprising a main vertical tubular body, a feed collar, an outer cone, an inner cone, a vertical distributing tubular body and a plate, coaxial to each other and in which:
- the main vertical tubular body is provided at its upper end with linking means with the horizontal tubular conduit, whereas its lower open end portion is provided with first lateral feed unloading openings;
- the feed collar surrounds the plate and is provided with coupling means to the main vertical tubular body,
- the smaller base of the outer cone is provided with a centred tubular extension;
- the smaller base of the inner cone is provided with a centred tubular extension fitted with second lateral feed unloading vents; and
- the vertical distributing tubular body is adapted for sliding on the main vertical tubular body in both directions and is provided with third lateral feed unloading vents, lower feed unloading vents and means for coupling the plate,
all in such a way that the outer cone and the inner cone are mutually linked to each other, through first coupling means arranged at their respective centred tubular extensions, and the outer cone and the vertical distributing tubular body are mutually joined by means of respective and complementary second coupling means, the assembly being adapted so that the feed level change of the horizontal tubular conduit for the feed transport causes, due to the sliding of the main vertical tubular body with respect to the vertical distributing tubular body, the passing of the feed through the first, second and third facing lateral vents or through the lower feed vents of the vertical distributing tubular body, alternatively.

Another feature of the invention consists of the linking means of the main vertical tubular body with the horizontal tubular conduit for the transport of feed comprising two generally semi-circumferential shaped half-flanges, one fixed and the other moveable, which can be mutually coupled configuring a circular housing adapted for the reception with the fitting of the horizontal tubular conduit, both half-flanges having respective and complementary articulation means adapted for allowing the turning of the moveable half-flange between an opening position, which makes it possible to situate the horizontal tubular conduit between the half-flanges, and a closing position, in which the conduit remains situated in said housing, and likewise the half-flanges having respective and complementary fastening means, which assure the closing position of same.

According to another feature of the invention, the moveable half-flange is provided with anti-settle means, adapted for fastening a cable arranged parallel to the horizontal tubular conduit.

According to another feature of the invention, the coupling means of the feed collar with the main vertical tubular body comprise a plurality of evenly distributed and upward-pointing arms in the feed collar, which converge forming a ring-shaped body which surrounds the main vertical tubular body.

According to another feature of the invention, the ring-shaped body can be fixed to the main vertical tubular body in one of two freely chosen positions, a lowered or feeding position used during the different poultry growth stages, and a raised position used when cleaning.

According to another feature of the trough according to the invention, the ring-shaped body can slide on the main vertical tubular body in both directions.

According to another feature of the invention, the first coupling means allow the inner cone to be moved upwards or downwards with respect to the outer cone, occupying one among several freely chosen positions, thereby regulating the size of the opening defined by the superposition of the first and third lateral openings.

Another feature of the invention consists of the fact that the second coupling means make it possible for the vertical distributing tubular body to be moved upwards or downwards with respect to the outer cone, occupying one among several freely chosen positions, thereby regulating the size of the opening defined by the superposition of the first and second lateral openings.

According to another feature of the invention, the main vertical tubular body and the vertical distributing tubular body are provided with respective and complementary limiting movement means with respect to each other.

Another feature of the invention consists of the inner cone base with the bigger diameter having a tail, which sets a curved convex extension.

According to another feature of the invention, the larger base of the outer cone extends into a tail which sets a curved convex extension.

### Brief description of the drawings.-

In the attached drawings, the poultry trough object of the invention is illustrated, by way of non-limited example. In said drawings,
Fig. 1 is an aerial view of the main vertical tubular conduit of the poultry trough according to the invention;
Fig. 2 is an aerial view of the feed collar of the trough according to the invention;
Fig. 3 is an aerial view of the outer cone;
Fig. 4 is an aerial view of the inner cone;
Fig. 5 is an aerial view of the vertical distributing tubular body;
Fig. 6 is a perspective view of the trough plate;
Fig. 7 is an aerial view of the poultry trough according to the invention;
Fig. 8 is a section view of the trough, with the main vertical tubular body in a position in which the feed release is done through the lateral openings;
Fig. 9 is a section view of the poultry trough according to the invention, with the main vertical tubular body in a position in which the feed release is done through the lower openings;
Fig. 10 is a side view of two troughs according to the invention, coupled to a horizontal tubular conduit for transporting feed;
Figs. 11, 12 and 13 show respective trough positions in terms of the animal's stage of growth; and
Fig. 14 is a section view of the trough, in cleaning position.

### Detailed description of the drawings.-

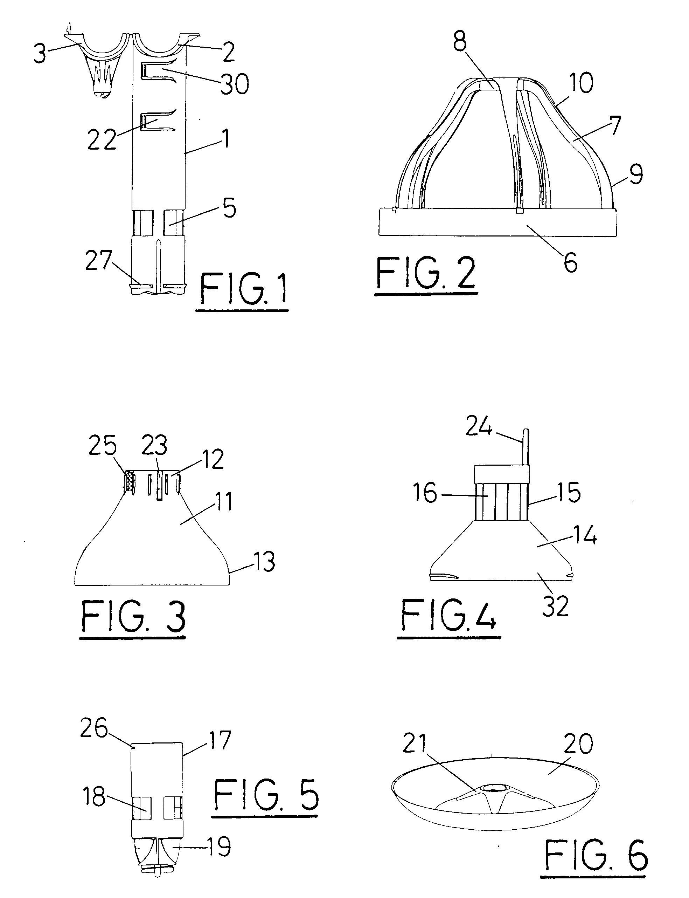

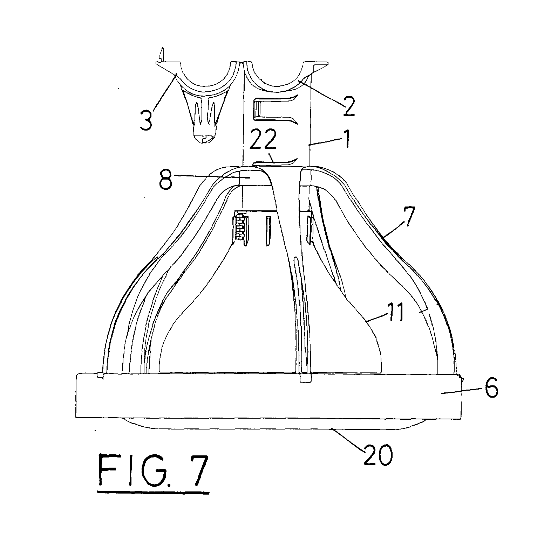

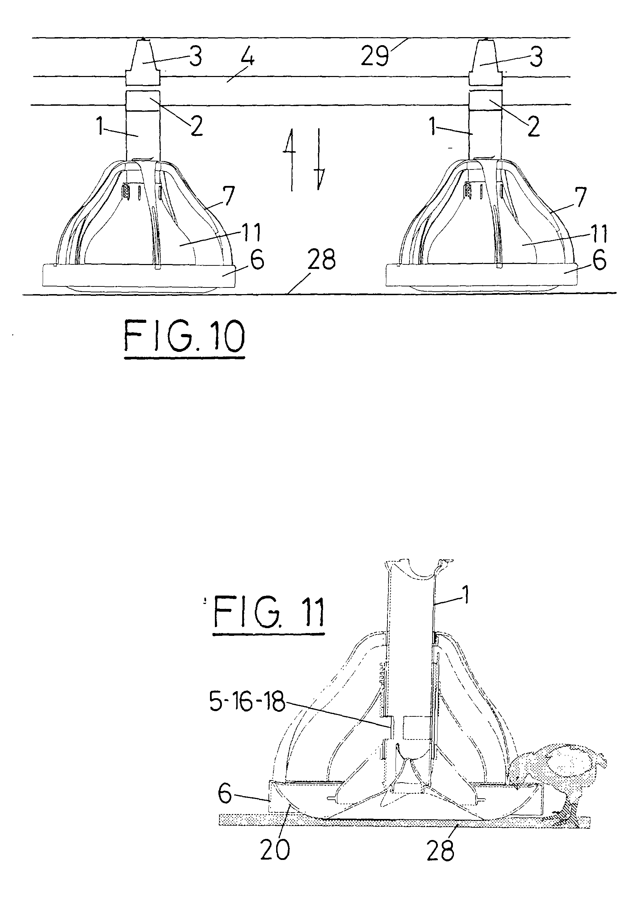

In Fig. 1 a main vertical tubular body 1 is shown whose upper end is provided with two generally semi-circumferential shaped half-flanges, fixed 2 and moveable 3, equipped with respective and complementary articulation means which allow the turning of the moveable half-flange 3 with respect to the fixed half-flange 2, between an open position, shown in Figs. 1 and 7, and a closed position, shown in Fig. 10, in which both half-flanges 2 and 3 form a housing adapted for receiving a horizontal tubular conduit 4 for transporting feed, all of it being adapted so that the feed transported by the conduit 4 passes through the main vertical tubular body 1, whereas the lower end of the main vertical tubular body which is open, is provided with first feed release lateral openings 5.

The feed collar 6 is provided with five equal arms 7, evenly distributed and pointing upwards, which converge forming a ring-shaped fixing body 8, each arm 7 comprising a convex portion 9 which starting from the collar 6 links with a second concave portion 10, both portions performing an anti-settle function.

The outer cone 11 has its smaller base provided with a centred tubular extension 12, whereas the larger base extends into a tail 13 which forms a curved convex portion.

Likewise, Fig. 4 shows an inner cone 14 whose smaller base extends into a centred tubular extension 15 provided with second lateral feed release openings, whereas the larger base extends into a tail 32 which forms a curved-convex portion.

The vertical distributing tubular body 17 is provided with third lateral feed release openings 18 and at the lower end lower feed release openings 19 (Fig. 5).

Plate 20, which appears in Fig. 6 has a concave bottom provided with a centred conical extension 21, pointing upwards.

As can be appreciated in Figs. 7, 8 and 9, in the poultry trough according to the invention, the ring-shaped fixing body 8 of the feed collar 6 is arranged in a 22 of the main vertical tubular body 1. The outer cone 11 and the inner cone 14 are mutually coupled through first coupling means comprising a groove 23, in the centred tubular extension 12 of the outer cone 23, and a toothed metal strip 24, which extends vertically from the centred tubular extension 15 of the inner cone 14 which can be coupled to said groove by way of a rack, all of it being adapted so that the inner cone 14 can slide upwards or downwards in different positions with respect to the outer cone 11.

The vertical distributing tubular body 17 and the outer cone 11 are mutually coupled through second coupling means which comprise a plurality of grooves 25 (Fig. 3), in the centred tubular extension 12 of the outer cone 11, and a fixing projection 26 (Fig. 5), at the upper end of the vertical distributing tubular body 17, which can be coupled to any of said grooves 25, all adapted so that the vertical distributing tubular body 17 can move upwards or downwards in different positions with respect to the outer cone 11.

Plate 20 is coupled to the lower end of the vertical distributing tubular body 17. In these conditions, the main vertical tubular body 1 and the feed collar 6 are integral to each other, whereas the outer cone 11, the inner cone 14 and the vertical tubular body 17 are, in turn, integral to each other, the main vertical tubular body 1 being able to move in both directions by sliding on the inside of the vertical distributing tubular body 17, said movement being limited on the perimeter by a projection 27 (Figs. 1, 8 and 9), arranged at the lower end of the main vertical tubular body 1.

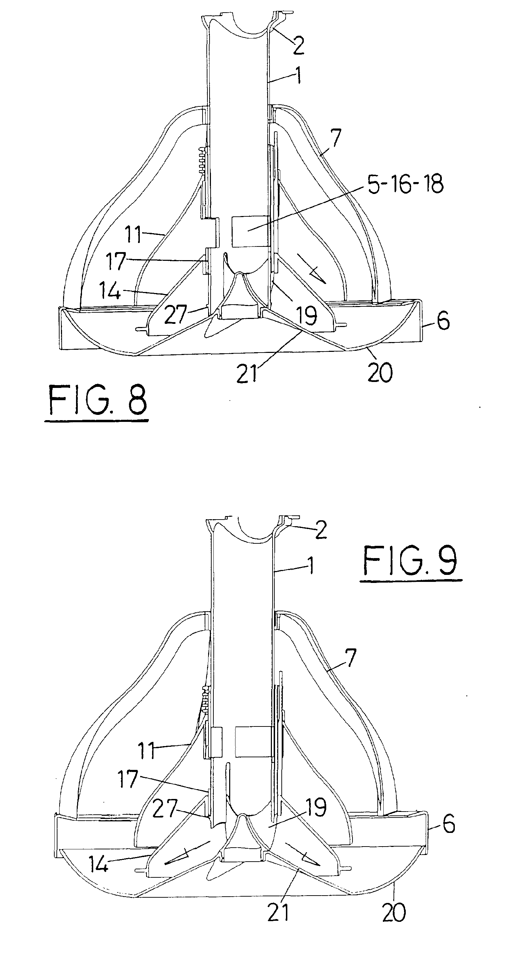

In Fig. 8 the main vertical tubular body 1 is situated in its lowest position, so the lower end of the main vertical tubular body 1 is supported on the conical extension 21 of plate 20, closing the lower feed release openings 19 of the vertical distributing tubular body.

The first lateral feed discharge openings 5 of the main vertical tubular body 1, the second lateral feed discharge openings 16 of the inner cone 14 and the third lateral feed discharge openings 18 of the vertical distributing tubular body 17, are facing each other. The relative position of the inner cone 14 and of the vertical distributing tubular body 17 with respect to the outer cone 11 is adapted in order to obtain a maximum feed discharge opening, which is done by means of the openings 5, 18 and 16, the feed sliding over the outer surface of the inner cone 14 until it reaches plate 20, as shown by the arrows.

The upward movement of the main vertical tubular body 1 and of the feed collar 6 which it is integral to, is illustrated in Fig. 9. Such movement is limited by the projection on the perimeter 27 of the lower end of the main vertical tubular body 1, which has an effect on the lower end of the vertical distributing tubular body 17, causing the closure of the second lateral openings 16 of the inner cone 14 and the closure of the third lateral openings 18 of the vertical distributing tubular body 17.

As is shown by means of arrows, the feed outflow takes place through the lower openings 19 of the vertical distributing tubular body 17, the feed sliding over the raised conical part 21 of plate 20.

The trough comprises a horizontal tubular conduit 4 for the transport of feed (Fig. 10), to which two poultry troughs are connected and which in the recommended position rest on the floor 28. Superimposed on the horizontal tubular conduit 4 an anti-settle cable 29 is arranged, which is fixed to the moveable half-flanges 3 and which runs parallel to the horizontal tubular conduit 4. The horizontal tubular conduit 4 is adapted for moving upwards or downwards, as shown by the arrows.

The operating of the poultry trough object of the invention which has been described as an embodiment example, is described in detail below at its different operating stages.

In Fig. 11 the poultry trough is shown, with the main vertical tubular body 1 situated at its lowest position. As described, the feed outflow is done by means of the lateral openings 5, 16 and 18 and the feed collar 6 surrounds the plate 20 which rests directly on the floor 28, such arrangement being particularly favourable for feeding poultry at the chick stage.

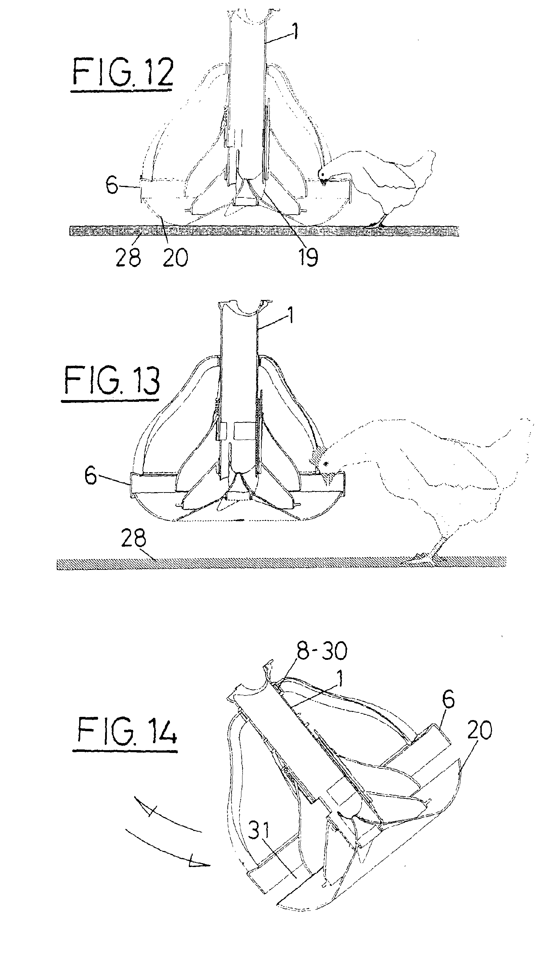

In the position shown in Fig. 12, the main vertical tubular body 1 is situated in its highest position with respect to plate 20 which continues to rest on the floor 28, and it is worth highlighting that the raising of the main vertical tubular body 1 is due to the raising of the feed transport horizontal tubular conduit 4. In these conditions, the feed outflow is done through the lower feed discharge openings 19 of the vertical distributing tubular body 17, the raising of the main vertical tubular body 4 causing the feed collar 6 to raise, which is arranged above plate 20, resulting in the raising of the edge for access to the feed contained in plate 20, such arrangement being particularly beneficial in poultry feeding at an intermediate growth stage.

In another position of the trough, shown in Fig. 13, the main vertical tubular body 1 is situated at its most raised position with respect to plate 20 and the whole trough assembly is arranged above floor level 28, emphasising that the raising of the trough is due to raising the feed transport horizontal tubular conduit 4. In these conditions, the operating of the trough does not differ with respect to that described in Fig. 12, with the exception that the feed contained in plate 20 is accessible in a particularly beneficial way to poultry which are in their final stage of growth.

The position of the trough shown in Fig. 14 corresponds to its cleaning. In order to clean plate 20, the main vertical tubular body 1 has a housing 30 (Fig. 1), adapted for receiving the ring-shaped fixing body 8 of the feed collar 6. In these conditions, the feed collar 6 is arranged over plate 20, defining a cleaning opening 31 which allows the emptying of the feed and comfortable access to the same just by tilting the trough and can be done by working on the fixed 2 and moveable 3 half-flanges that join the main vertical tubular body 1 to the feed transport horizontal tubular conduit 4.

A second form of embodiment of the poultry trough not shown, differs from the one described earlier by the fact that the ring-shaped collar 8 of the feed collar 6 can slide freely in both directions over the main vertical tubular body 1, between two pre-fixed positions. This coupling arrangement allows the main vertical tubular body 1 to occupy, with respect to the feed collar 6, any position situated between the said two pre-fixed positions.

## Claims

1. Poultry trough, of the kind which can be connected to a horizontal tubular conduit (4) for the transport of feed, **characterised in that** it comprises a main vertical tubular body (1), a feed collar (6), an outer cone (11), an inner cone (14), a vertical distributing tubular body (17) and a plate (20), coaxial to each other and in which:
- the main vertical tubular body (1) is provided at its upper end with linking means (2, 3) with the horizontal tubular conduit (4), whereas its lower open end portion is provided with first lateral feed discharge openings (5);
- the feed collar (6) surrounds the plate (20) and is provided with coupling means (7, 8) to the main vertical tubular body (1);
- the smaller base of the outer cone (11) is provided with a centred tubular extension (12);
- the smaller base of the inner cone (14) is provided with a centred tubular extension (15) fitted with second lateral feed discharge openings (16); and
- the vertical distributing tubular body (17) is adapted for sliding on the main vertical tubular body (1) in both directions and is provided with third lateral feed discharge openings (18), lower feed discharge openings (19) and means for coupling the plate (20),
all in such a way that the outer cone (11) and the inner cone (14) are mutually linked to each other, through first coupling means (23, 24) arranged at their respective centred tubular extensions (12, 15), and the outer cone (11) and the vertical distributing tubular body (17) are mutually joined by means of respective and complementary second coupling means (25, 26), the assembly being adapted so that the feed level change of the horizontal tubular conduit (4) for the feed transport causes, due to the sliding of the main vertical tubular body (1) with respect to the vertical distributing tubular body (17), the passing of the feed through the first (5), second (16) and third (18) facing lateral openings or through the lower feed openings (19) of the vertical distributing tubular body (17), alternatively.

2. Poultry trough according to claim 1, which is **characterised in that** the linking means of the main vertical tubular body (1) with the horizontal tubular conduit (4) for the transport of feed comprises two generally semi-circumferential shaped half-flanges, one fixed (2) and the other moveable (3), which can be mutually coupled configuring a circular housing adapted for the reception with the fitting of the horizontal tubular conduit (4), both half-flanges having respective and complementary articulation means adapted for allowing the turning of the moveable half-flange (3) between an opening position, which makes it possible to situate the horizontal tubular conduit (4) between the half-flanges, and a closing position, in which the conduit (4) remains situated in said housing, and likewise the half-flanges having respective and complementary fastening means, which assure the closing position of same.

3. Poultry trough according to claim 2, which is **characterised in that** the moveable half-flange (3) is provided with anti-settle means, adapted for fixing a cable (29) arranged parallel to the horizontal tubular conduit (4).

4. Poultry trough according to claim 1, which is **characterised in that** the coupling means of the feed collar (6) with the main vertical tubular body (1) comprise a plurality of evenly distributed and upward-pointing arms (7) in the feed collar (6), which converge forming a ring-shaped body (8) which surrounds the main vertical tubular body (1).

5. Poultry trough according to claim 4, which is **characterised in that** the ring-shaped body (8) can be fixed to the main vertical tubular body (1) in one of two freely chosen positions, a lowered or feeding position used during the different poultry growth stages, and a raised position used when cleaning.

6. Poultry trough according to claim 4, which is **characterised in that** the ring-shaped body (8) can slide on the main vertical tubular body (1) in both directions.

7. Poultry trough according to claim 1, which is **characterised in that** the first coupling means (23, 24) allow the inner cone (14) to be moved upwards or downwards with respect to the outer cone (11), occupying one among several freely chosen positions, thereby regulating the size of the opening defined by the superposition of the first (5) and third (18) lateral openings.

8. Poultry trough according to claim 1, which is **characterised in that** the second coupling means (25, 26) make it possible for the vertical distributing tubular body (17) to be moved upwards or downwards with respect to the outer cone (11), occupying one among several freely chosen positions, thereby regulating the size of the opening defined by the superposition of the first (5) and second (16) lateral openings.

9. Poultry trough according to claim 1, which is **characterised in that** the main vertical tubular body (1) and the vertical distributing tubular body (17) are provided with respective and complementary means (27) for restricting the movement with respect to each other.

10. Poultry trough according to claim 1, which is **characterised in that** the inner cone (14) base with the bigger diameter having a tail (32) which sets a curved convex extension.

11. Poultry trough according to claim 1, which is **characterised in that** the larger base of the outer cone (11) extends into a tail (13) which sets a curved convex extension.
